# EUROPEAN PATENT APPLICATION

(11) **EP 0 940 089 A1**
(43) Date of publication of application: **08.09.1999**
(21) Application number: 99200417.6
(22) Date of filing: 13.02.1999
(51) Int. Cl.: A23L 1/16, A23P 1/08

(54) **Refrigerated pastas**

(30) Priority: 02.03.1998 US 33281
(71) Applicant: SOCIETE DES PRODUITS NESTLE S.A., 1800 Vevey (CH)
(72) Inventor: Hsu, Jan Yann, Brookfield, CT 06804 (US); Fuchs, Karl Christian, Gaylordsville, CT 06755 (US); Herrick, James Peter, Brookfield, CT 06804 (US); Wyant, Louise Barbara, New Milford, CT 06776 (US)
(74) Representative: Pate, Frederick George

(57) **Abstract**

A process for the production of a refrigerated filled or non-filled pasta which comprises coating either the dough shell of a raw filled pasta or a non-filled raw pasta with salt to obtain a water activity of from 0.85 to 0.94, steaming the salt-coated pasta to give a moisture content of the pasta dough of from 30 to 40% by weight, and packaging the pasta under modified atmospheric or vacuum conditions.

## Description

### FIELD OF THE INVENTION

The present invention relates to refrigerated filled or non-filled pastas more particularly to pastas containing a moisture content higher than that of a regular pasta.

### BACKGROUND OF THE INVENTION

Refrigerated pastas are commonly referred to as "fresh" pastas and are prepared by steam pasteurization of raw pastas followed by short time surface drying, gas-packaged in nitrogen or nitrogen and carbon dioxide gas. They usually have a shelf life of from about 40 to 60 days. They include filled and non-filled pastas.

Conventional refrigerated filled pastas include ravioli and tortellini type products with a meat or cheese filling and are produced by lowering the water activity of the filling and the dough shell below 0.94, steam pasteurizing and packaging in modified atmospheric conditions using, for example, nitrogen, carbon dioxide or a mixture thereof. They usually have a shelf life of from about 40 to 60 days. The method used to lower the water activity is usually drying and the use of salt wherein salt is added to the filling and drying is applied to the whole ravioli. The moisture content of the dough shell ranges from 26 to 30% and the moisture content of the filling ranges from 39 to 42%. Depending on the thickness of dough shell (0.030 to 0.050 inches), the cooking time of the filled pasta ranges from 4 to 8 minutes

Non-filled refrigerated pastas are regular pastas and include fettucine, linguine, elbow macaroni and rotini, etc. which can be produced either by dough sheeting or dough extruding. The moisture content of the dough ranges from about 27% to 32% and the water activity ranges from about 0.90 to 0.94.

Salt is commonly used to preserve pasta products and examples of the use of salt are described in the following patent publications:
EP-A-0275838 describes the use of salt in the dough ingredients followed by drying to reduce the water activity of pasta to 0.84 to 0.87.
JP-A-58036362 describes the use of salt (and alcohol) in the dough flour to reduce the water activity of fresh noodles to 0.94 or lower.
JP-A-57036954 describes the use of salt (and alkaline salts) in Chinese noodle material to reduce the water activity to 0.86-0.94.
JP-A-80184043 describes the use of salt (and glycerin) in the dough to reduce water activity of Chinese noodles.
BR-A-9203393 describes the use of salt (and tartaric acid) in the dough ingredients to preserve the pasta.

In all the above patents, the fact that salt was not used alone when added to the dough ingredients indicates that there are deficiencies when using salt alone in the dough as a preservative. These deficiencies are saltiness and the effect on the pasta texture which causes softness and because of these deficiencies, the amount of salt used cannot be too high (8% is the highest amount used in these patents) and it needs to be used with other additives.

An object of the present invention is to produce a refrigerated pasta whose dough has a higher moisture content but has the same or a lower water activity when compared with a conventional refrigerated pasta but which maintains the same shelf life.

### SUMMARY OF THE INVENTION

We have found that by coating a non-filled pasta or the dough shell of a filled pasta with salt, the above objects are achieved. The higher moisture content gives a higher yield and a shorter cooking time while the lower water activity enables the drying step to be shortened or eliminated. There is also less breakage during cooking, the pasta has a better appearance, and in some cases, the drying step may be eliminated.

Accordingly, the present invention provides a process for the production of a refrigerated filled or non-filled pasta which comprises coating either the dough shell of a raw filled pasta or a non-filled raw pasta with salt to obtain a water activity of from 0.85 to 0.94, steaming the salt-coated pasta to give a moisture content of the pasta dough of from 30 to 40% by weight, and packaging the pasta under modified atmospheric or vacuum conditions.

### DETAILED DESCRIPTION OF THE INVENTION

Filled refrigerated pastas include ravioli, tortellini, tortolloni, etc. Non-filled refrigerated pastas are regular pastas and include fettucine, spaghetti, linguine, elbow macaroni and rotini, etc.

The pasta ingredients of the dough for preparing the pasta may include a dry farinaceous ingredient and water, with or without one or more additives, to form a dough. The farinaceous ingredient may be one or more of durum semolina, rice flour, buckwheat flour, durum flour, regular wheat flour, whole wheat flour, farina flour, corn flour or starch material, or any mixture thereof depending on the type of pasta product desired. Generally, durum semolina is preferred for extruded pasta, such as spaghetti, macaroni, etc., while durum or wheat flour are preferred for sheeted pasta, such as noodles. The farinaceous ingredient is usually present in an amount of from 75 to 85% of the dry ingredient mixture depending on the variety and particle size. The amount of water mixed with the farinaceous ingredient is normally from 15 to 35% by weight based on the total weight of the dough. The temperature of the water mixed with the farinaceous ingredient may be from 5° to 30°C and more usually from 10° to 25°C. The water used may be acid or alkaline and the pH is usually from 6 to 7.

Wheat gluten is typically included in the dry ingredient mix at a level of about 2 to 20% by weight of the dry mix, with amounts between 5% and 10% being preferred, to increase the protein content of the pasta thereby increasing its strength and firmness. Dehydrated egg material such as dried egg white, dried eggs and dried yolks, for instance in the powder form, and/or liquid whole eggs, may if desired, be included in the ingredient mix at levels up to about 5.5% by weight for dry products and up to about 22% by weight for liquid products, based on the weight of the dry ingredient mix. Whole eggs and egg yolks generally are used in the production of noodles, while dried egg whites are generally used in the production of spaghetti. In addition, glyceryl monostearate may, if desired, also be included in the ingredient mix, particularly in the production of extruded pasta, to improve firmness, reduce stickiness and minimize absorption of water from the sauce component by the pasta. If used, the glyceryl monostearate preferably is present in amounts of from 0.5 to 2% by weight of the dry ingredient mix. It is to be understood that wheat gluten, eggs, and glyceryl monostearate are optional ingredients in the dry mix and are not essential in the production of the pasta component. It is also advantageous to use propylene glycol alginate in the dry ingredient mix to obtain a pasta with an elastic and firm texture, preferably in an amount of from 0.01 to 1.0% by weight based on the weight of the dry ingredient mix.

If desired, seasonings, spices or flavourings such as meat, chicken or beef flavours may be added to the pasta dough, e.g. in amounts of from 0.1 to 5% by weight based on the total weight of the pasta.

The dough may be formed into the pasta under pressure by conventional methods such as sheeting, kneading or extrusion into a variety of pasta sizes and shapes, e.g. ravioli, spaghetti, macaroni, noodles and the like.

The salt used to coat the pasta may be sodium chloride, potassium chloride, magnesium chloride or any mixture thereof. The coating of the pasta with salt may be carried out by spraying a salt solution ( which may or may not be saturated) onto the pasta or by immersion of the pasta in a salt solution. The coating may be carried out prior to steaming, during steaming or after steaming. The salt is preferably used as an aqueous solution and the amount of salt in the aqueous solution is preferably from 5 to 28%, preferably from 15 to 25% by weight. The duration of the spraying may be from 10 seconds to 5 minutes and preferably from 30 seconds to 2 minutes. The duration of the immersion may be from 1 second to 5 minutes, preferably from 10 seconds to 1 minute and more preferably from 20 to 40 seconds. The temperature of the salt solution may be from 15° to 40°C and the higher the temperature of the salt solution, the shorter the dip time required. If desired, a sweetener may be incorporated in the salt solution. Examples of sweeteners are sugar, corn syrup such as high fructose corn syrup in amounts of from 5 to 20% by weight as well as artificial sweeteners such as aspartame or acesulfame-K in amounts of from 0.01 to 0.1 % by weight.Salt may be added to the filling of a filled pasta to reduce the water activity of the filling. The amount of salt added to the filling may be from 0.5 to 5% and preferably from 1 to 2.5% by weight.

The steaming of the salt-coated pasta may be carried out using saturated steam or steam at atmospheric condition, e.g. at a temperature from 85° to 100°C and conveniently from 95° to 100°C for a period of from 1 to 5 minutes, preferably from 1.5 to 3.5 minutes. The steaming cooks or gelatinises at least part of the surface of the pasta, e.g. at least 50% and preferably substantially all the surface of the pasta. Preferably, the moisture content is increased to a range of from 32 to 38%.

If necessary, a partial drying step may be used to reduce the moisture content of the steamed pasta dough to the desired moisture content within the range of from 30 to 40% by weight, e.g. in a hot air tunnel at a temperature of from 40° to 60°C for a period of from 10 seconds to 1 minute.

If desired, chilling of the steamed pasta may be carried out after steaming or after drying. The chilling may be carried out by passing the pasta through a cool air tunnel with a temperature of 2° to 5°C until the pasta temperature reaches 2° to 10°C.

The pastas are packaged in suitable containers, e.g. food-grade flexible plastics pouches or glass jars. The packaging of the pasta in the container under modified atmospheric or vacuum conditions is preferably carried out at ambient or chilled temperature. The modified atmosphere may comprise nitrogen or carbon dioxide alone or a mixture of nitrogen and carbon dioxide as is conventionally used, e.g. a ratio of N₂ to CO₂ of 80:20, 65:35 or 50:50.

Coating of the salt solution on the surface of the dough shell does not cause saltiness as much as a similar amount of salt within the dough since the salt is rinsed away during cooking, but it can reduce the water activity significantly. We have found that the pasta made by the process of the present invention with a higher moisture content than a conventional refrigerated pasta has a similar shelf life as a conventional refrigerated pasta with a lower moisture content but the same water activity.

### EXAMPLES

The following Examples further illustrate the present invention.

### Example 1

Raw beef ravioli is dipped in a 25% by weight salt solution for 30 seconds at 25°C to give a water activity of the ravioli skin of 0.932 (water activity of the whole ravioli =0.935 and the water activity of the ravioli filling= 0.936) and then steamed at 95°C for 2 minutes to obtain a moisture content of the ravioli dough skin of 34.4% ( moisture content of the whole ravioli=37.8% and the moisture content of the ravioli filling=41.6%).

The steamed ravioli is then chilled to 4°C and the packaged in glass jars using a modified atmosphere comprising a mixture of nitrogen and carbon dioxide in a ratio of 50:50.

The ravioli may be cooked for consumption to a moisture content of 54.5% in 3 minutes. This cook time is about half that of a lower moisture regular pasta and is due to the higher moisture content and less surface hardening because there is no drying step.

### Example 2

Three beef ravioli samples were produced. All of them used the same beef filling that contained 77.20 % ground beef, 13.4% breadcrumbs, 3.96% grated Romano cheese, 3% non-fat milk powder, 1.28% salt, 0.66% dried spinach flakes, 0.19% ground basil, 0.16% fine black pepper and 0.15% ground nutmeg. Because of the total salt content (1.9%) and cooking (drying ) step , the water activity of the beef filling was 0.93-0.94 and the moisture content was 41 to 42 %. Dough shell was prepared from 72.7% durum flour, 15.0% liquid whole egg and 12.3 % water. It was sheeted to 0.038" (top sheet ) and 0.034" (bottom sheet) thickness. The ravioli was formed by using 57% dough skin and 43 % filling, the weight of each ravioli was ranged from 5 to 6 g. After ravioli was formed, three processing conditions were used;
Sample A ( Control ) : Steam at 98-99 C for 90 seconds, followed by drying at 49-50 C for 15 min. and cooling at 1-2 C for 5 min. Packaged with nitrogen gas
Sample B (Test) : Dipping in 28 % saturated salt solution for 30 seconds, followed by steaming at 98-99 C for 90 seconds and cooling at 1-2 C for 5 min. No drying. Packaged with nitrogen gas.
Sample C (Test) : Same as sample B, but raviolis were dried at 49-50 C for 30 seconds after steaming and before cooling.

Overnight analysis of these samples showed the following results :
1. Whole ravioli:

| Samples | Water activity | Moisture |
|---|---|---|
| A | 0.943 | 33.1% |
| B | 0.935 | 37.8% |
| C | 0.935 | 36.1% |

2. Dough shell:

| Samples | Water activity | Moisture |
|---|---|---|
| A | 0.937 | 27.7% |
| B | 0.932 | 34.4% |
| C | 0.924 | 34.1% |

3. Filling:

| Samples | Water activity | Moisture |
|---|---|---|
| A | 0.940 | 42.1% |
| B | 0.936 | 41.6% |
| C | 0.932 | 41.1% |

These results showed the dough shell and whole ravioli of both samples B & C had a higher moisture content than sample A ( control process ), yet their water activity are the same as control or lower. By cooking these samples for 3 and 6 minutes showed the following moisture contents;

| Samples | Cook time | Cooked moisture |
|---|---|---|
| A | 3 min. | 48.7% |
| | 6 min. | 53.1% |
| B | 3 min. | 54.5% |
| C | 3 min. | 52.0% |

These results indicated the cook time of test samples B & C was only one half of the control A sample.

These samples were stored at 6 C for 45 days and the microbiological test results were as follows;

| Total plate Lactic acid | | | | Coliform | | |
|---|---|---|---|---|---|---|
| Samples | count | bacteria | Staph. | Yeast/mold | E.coli | B.Cereus |
| A | 2.1x10⁴ | < 100 | <100 | 2.1x10⁴ | <10 | <100 |
| B | 1.0x10³ | <100 | <100 | 6.0x10² | <10 | <100 |
| C | 7.5x10² | <100 | <100 | <100 | <10 | <100 |

These results indicated that test samples B & C were as stable as the control sample A in refrigerated condition and drying step used in control process could be eliminated. Analysis of water activity of these samples also showed sample A : 0.939, sample B :0.938 and sample C:0.933. This results showed that there was no significant change of water activity after storage

### Example 3

Three cheese ravioli samples were produced. All of them used the cheese filling that contained 17.26 % grated Romano cheese, 15.95 % grated Parmesan cheese, 6.54 % grated Fontina cheese, 5.77 % Ricotta cheese, 0.45 % salt, 0.39 % onion powder, 0.08 % garlic powder, 13.14 % heavy cream, 9.62 % salted butter, 7.05 % liquid whole egg, 17.17 % breadcrumbs, 3.63 % low lactose whey powder and 2.95 % gum arabic.
Because of total salt content ( 2.0 % ) and cooking (drying) step, the water activity of cheese filling was 0.93-0.94 and the moisture content was 40 to 41 %. Dough shell was prepared from 72.7% durum flour, 15.0 % liquid whole egg and 12.3 % water. It was sheeted to 0.038" ( top sheet ) and 0.034" ( bottom sheet ) thickness. The ravioli was formed by using 57 % dough skin and 43 % filling, the weight of each ravioli was ranged from 5 to 6 g. After ravioli was formed, three processing conditions were used;
Sample A ( Control ) : Steam at 98-99 C for2 min., followed by drying at 49-50 C for 20 min. and cooling at 4-5 C for 15 min. Packaged with nitrogen gas.
Sample B ( Test ) : Dipping in 25 % salt solution for 30 seconds, followed by steaming at 98-99 C for 2 min. and cooling at 4-5 C for 15 min. No drying. Packaging with nitrogen gas.
Sample C ( Test ) : Sample as sample B, but raviolis were dried at 49-50 C for 30 seconds after steaming and before cooling.

The moisture content of whole ravioli were ; A : 28.3 %, B : 35.0 % and C:32.6 %.

These samples were stored at 6 C for 30 days and the microbiological test results were as follows;

| Total plate Lactic acid | | | | Coliform | | |
|---|---|---|---|---|---|---|
| Samples | count | bacteria | Staph. | Yeast/mold | E-coli | B.Cereus |
| A | 7.5x 10² | <10 | <10 | 1.5x10² | <10 | <10 |
| B | 7.2x10² | <10 | <10 | <10 | <10 | <10 |
| C | 1.0x10³ | <10 | <10 | <10 | <10 | <10 |

These results indicated that test samples B & C were stable with less yeast / mold growth than the control sample A

The water activity of theses samples after 30 days storage at 6 C were as follows:

| Samples | Water activity |
|---|---|
| A | 0.922 |
| B | 0.926 |
| C | 0.920 |

### Example 4

Three cheese ravioli samples were prepared with the same formulation of Example B, but two of the samples were processed differently and they were as follows;
Sample A ( Control ) : Steam at 98-99 C for 2 min., followed by drying at 49-50 C for 20 min. and cooling at 4-5 C for 15 min. Packaged with nitrogen gas.
Sample B ( Test ) : Same as sample A, but raviolis were dipped in 25 % salt soln. for 30 seconds after drying step and followed by cooling.
Sample C ( Test ) : Same as sample A, but raviolis were dipped in 25 % salt soln. for 3 min. and no cooling step was applied.

The moisture content of whole ravioli were A: 28.2 %, B: 33.4 % and C: 33.3 %

These samples were stored 6 C for 40 days and the microbiological test results were as follows :

| Total plate Lactic acid | | | | | |
|---|---|---|---|---|---|
| Samples | count | bacteria | Staph. | Yeast/ mold | B.Cereus |
| A | 1.3x10² | <100 | <100 | <100 | <100 |
| B | 6.0x10² | <100 | <100 | <100 | <100 |
| C | 1.0x10³ | <100 | <100 | <100 | <100 |

These results indicated that test samples B & C were as stable as the control sample A in refrigerated condition and salt soln. dipping step could be applied after steaming step. It also showed salt soln. dipping could be used for cooling.

The water activity of these samples after 40 days storage at 6 C were as follows;

| Samples | Water activity |
|---|---|
| A | 0.922 |
| B | 0.903 |
| C | 0.910 |

### Example 5

Three cheese ravioli samples were prepared with the same formulation of Example B, but two of the samples were processed differently and they were as follows;
Sample A ( Control ) : Steam at 98-99 C for 2 min., followed by drying at 49-50 C for 15 min. and cooling at 4-5 C for 15 min. Packaged with nitrogen gas.
Sample B ( Test ) : Ravioli samples were dipped in 25 % salt soln. for 2.5 min. after steaming step and no drying and cooling steps were applied. Packaged with nitrogen gas.
Sample C ( Test ) : Same as Sample B, but drying step was applied (49-50 C for 15 min.). Packaged with nitrogen gas.

The moisture content and water activity of whole ravioli were as follows;

| Sample | Moisture content | Water activity |
|---|---|---|
| A | 27.4 % | 0.928 |
| B | 37.9 % | 0.927 |
| C | 33.4 % | 0.907 |

These results indicated that salt soln. dipping also could be applied after steaming followed by drying or no drying step.

## Claims

1. A process for the production of a refrigerated filled or non-filled pasta which comprises coating either the dough shell of a raw filled pasta or a non-filled raw pasta with salt to obtain a water activity of from 0.85 to 0.94, steaming the salt-coated pasta to give a moisture content of the pasta dough of from 30 to 40% by weight, and packaging the pasta under modified atmospheric or vacuum conditions.

2. A process according to claim 1 wherein the coating of the pasta with salt is carried out by spraying a salt solution onto the pasta or by immersion of the pasta in a salt solution.

3. A process according to claim 1 wherein the coating is carried out prior to steaming, during steaming or after steaming.

4. A process according to claim 1 wherein the salt used to coat the pasta is sodium chloride, potassium chloride, magnesium chloride or any mixture thereof.

5. A process according to claim 1 wherein the salt is used as an aqueous solution.

6. A process according to claim 1 wherein the amount of salt in the aqueous solution is from 5 to 28% by weight.

7. A process according to claim 2 wherein the duration of the immersion is from 1 second to 5 minutes.

8. A process according to claim 2 wherein a sweetener is incorporated in the salt solution.

9. A process according to claim 2 wherein the sweetener is sugar, high fructose corn syrup in an amount of from 5 to 20% by weight.

10. A process according to claim 2 wherein the sweetener is aspartame or acesulfame-K in an amount of from 0.01 to 0.1 % by weight.

11. A process according to claim 1 wherein the steaming of the salt-coated pasta is carried out using saturated steam or steam at atmospheric condition for a period of from 1 to 5 minutes.

12. A process according to claim 1 wherein a partial drying step is used to reduce the moisture content of the steamed pasta dough to the desired moisture content of from 30 to 40% by weight.

13. A process according to claim 1 wherein chilling of the steamed pasta is carried out after steaming or after drying.

14. A refrigerated filled or non-filled pasta having a water activity of from 0.85 to 0.94 and a moisture content of the pasta dough of from 30 to 40% by weight obtainable by a process according to any of the preceding claims.
